# EUROPEAN PATENT APPLICATION

(11) **EP 3 639 985 A1**
(43) Date of publication of application: **22.04.2020**
(21) Application number: 18200421.8
(22) Date of filing: 15.10.2018
(51) Int. Cl.: B25J 11/00, B65G 47/90, B65H 67/06

(54) **REPLENISHMENT PLANT AND REPLENISHMENT METHOD**

(71) Applicant: Tetra Laval Holdings & Finance S.A., 1009 Pully (CH)
(72) Inventor: LACCHINI, Livio, 43126 Parma (IT); BARBATO, Antonio, 41012 Carpi (IT)
(74) Representative: Tetra Pak - Patent Attorneys SE

(57) **Abstract**

There is described a replenishment plant (1) configured to replenish a storage unit (2) with a plurality of caps destined to be applied on packages containing a pourable product; the replenishment plant (1) comprises: an input station (I), at which at least one closed receptacle (4) containing the caps is provided; an output station (O), at which the caps are fed to the storage unit (2) by emptying the receptacle (4) from the caps; and a robotic arm (5) configured to pick the receptacle (4) at the input station (I) and to carry the receptacle (4) to the output station (0); the robotic arm (5) comprising a robotic tool (6) configured to perform opening operations on the receptacle (4) so as to allow emptying of the opened receptacle (4) from said caps at the output station (0).

## Description

### TECHNICAL FIELD

The present invention relates to a replenishment plant, in particular to an automatic cap replenishment plant for replenishing a hopper with caps configured to be applied on respective packages containing a pourable product, preferably a pourable food product.

The present invention also relates to a replenishment method, in particular to a method for automatically replenishing a hopper with caps configured to be applied on respective packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated sheet of packaging material.

In particular, the packaging material has a multilayer structure substantially comprising a base layer for stiffness and strength, which may be made of fibrous material, e.g. paper or mineral-filled polypropylene material, and a number of lamination layers made of heat-seal plastic material, e.g. polyethylene films, covering both sides of the base layer.

In the case of aseptic packages for long-storage products, such as UHT milk or fruit juice, the packaging material also comprises a layer of gas-barrier material, e.g. aluminum foil or ethyl vinyl alcohol (EVOH) film, which is superimposed on a layer of heat-seal plastic material, and is in turn covered with another layer of heat-seal plastic material. This latter layer of plastic material forms the inner face of the package eventually contacting the pourable food product.

Packages of this sort are normally produced on fully automatic packaging assemblies, in which a continuous tube is formed from the sheet of packaging material.

In detail, the tube of packaging material is first filled with the pourable food product, and then is formed, sealed and cut so as to obtain a plurality of sealed pillow packs containing the pourable food product.

The pillow packs are then folded mechanically to form respective finished, substantially parallelepiped-shaped packages.

Once formed, the above-mentioned packages may undergo further operations, such as the application of a reclosable cap.

At present, the most commonly marketed caps comprise:
- a frame defining a pour opening for the package and fitted about a hole or a pierceable portion or a removable portion of a top wall of the package; and
- a closing member hinged or screwed to the frame and which is removable to open the package.

Alternatively, other types of caps, e.g. slide-open caps, are also known to be used.

The pierceable portion of the package may be defined, for example, by a so-called "prelaminated" hole, i.e. a hole formed in the base layer of the packaging material and covered by the layer of gas-barrier material, which is whole and closes the hole to ensure airtight, aseptic sealing, while still being easily pierceable.

In order to apply the caps on the relative packages, an applicator unit is provided in a position operatively downstream of the packaging assembly.

In particular, the applicator unit is configured to apply each cap, i.e. each frame and the relative closing member, on one respective package by heat sealing or by gluing the cap on the top wall of the package, so as to cover the above-described prelaminated hole.

According to an alternative embodiment, the frames are pre-applied, for example injection molded, onto the top wall of the respective packages, whereas the applicator unit is configured to screw the corresponding closing members onto such pre-applied frames.

Typically, the applicator unit comprises a hopper configured to receive and temporarily store the caps to be applied on the packages. Hence, the hopper defines a temporary storage device (or a buffer) of caps for the applicator unit.

In order to maintain the production rate at the desired level, such hopper has to be periodically replenished with caps.

The caps are usually contained in respective plastic bags provided inside relative boxes, which are normally closed by a strip of adhesive tape.

At present, replenishment of the hopper is carried out manually by an operator.

Accordingly, the operator manually picks up, one by one, the boxes containing the caps, opens such boxes by cutting the adhesive tape and then bends outwardly the flaps of each box and maintains such flaps open.

At the same time, the operator manually opens the plastic bag and fits the plastic bag onto the upper edge of the box, so as to wrap such upper edge. This latter operation allows to prevent any dust located between the box and the bag from falling into the hopper.

Eventually, the operator pours the caps into the hopper.

Although being functionally valid, the known replenishment plant and the known method for replenishing the above-mentioned hopper with caps are still open to further improvement, in particular as to optimize replenishment timing, achieve proper hygienic conditions of the operation and reduce the injury risks linked to the operation.

### DISCLOSURE OF INVENTION

It is therefore an object of the present invention to provide a replenishment plant, which is designed to fulfill at least one of the above-mentioned needs in a straightforward and low-cost manner.

This object is achieved by a replenishment plant as claimed in claim 1.

It is a further object of the present invention to provide a replenishment method, which is designed to fulfill at least one of the above-mentioned needs in a straightforward and low-cost manner.

This object is achieved by a replenishment method as claimed in claim 10.

### BRIEF DESCRIPTION OF THE DRAWINGS

A non-limiting embodiment of the present invention will be described by way of example with reference to the accompanying drawings, in which:
Figure 1 shows a perspective view, with parts removed for clarity, of a replenishment plant according to the present invention;
Figures 2a and 2b are larger-scale schematic top views, with parts removed for clarity, of a component of the replenishment plant of Figure 1 during two different operating conditions; and
Figure 3 and 4 are two larger-scale perspective views, with parts removed for clarity, of a particular of the replenishment plant of Figure 1.

### BEST MODE FOR CARRYING OUT THE INVENTION

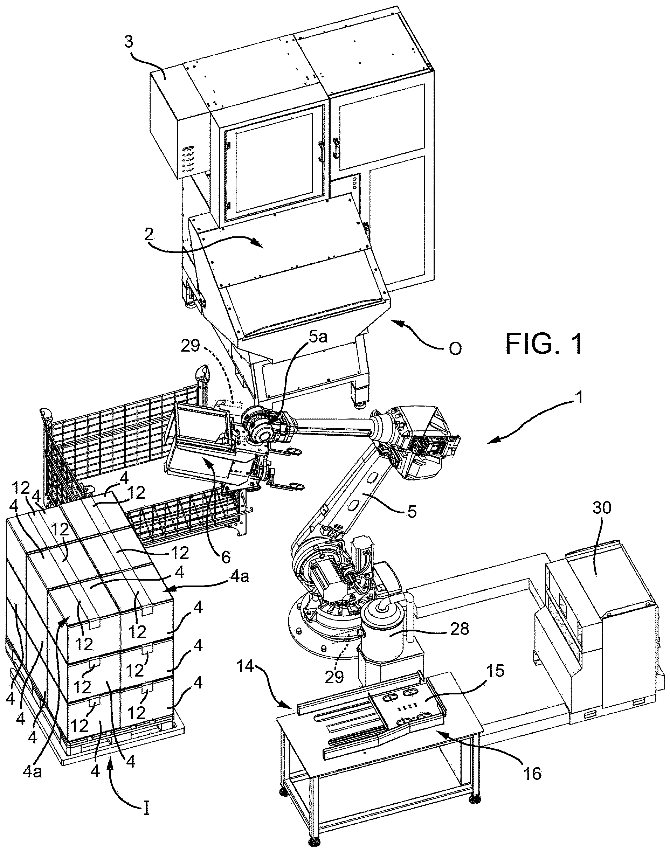

With reference to Figure 1, number 1 indicates as a whole a replenishment plant configured to replenish a storage unit, in particular a temporary storage unit, even more in particular a hopper 2, with a plurality of caps (not shown) destined to be applied on packages (not shown) containing a pourable product, in this specific case a pourable food product.

Such packages are produced, in a manner known and not described in detail, from sheets of packaging material comprising: a base layer, e.g. of fibrous material, such as cardboard, or of mineral-filled polypropylene material; and a number of layers of heat-seal plastic material, e.g. polyethylene film, covering both sides of the base layer. In the case of aseptic packages for long-storage products, such as UHT milk, the packaging material also comprises a layer of gas-and light-barrier material, e.g. aluminum foil or ethyl vinyl alcohol (EVOH) film, which is superimposed on a layer of heat-seal plastic material, and is in turn covered with another layer of heat-seal plastic material forming the inner face of package eventually contacting the food product.

Once produced, each package undergoes further operations, such as the application thereon of one respective cap, preferably a reclosable cap.

In particular, each package, which is, for example, substantially parallelepiped-shaped, has, on a top wall, an opening or a pierceable portion or a removable portion, which is configured to be covered outwardly by a respective cap, applied thereon by a cap applicator unit 3 (only partially shown).

As visible in Figure 1, hopper 2 is part of cap applicator unit 3, and is preferably arranged in a rear portion of cap applicator unit 3.

In order to provide the required number of caps to be applied on the respective packages, i.e. to maintain the production rate at the desired level, hopper 2 has to be periodically replenished.

According to the preferred embodiment shown, replenishment plant 1 comprises:
- an input station I, at which a plurality of closed receptacles 4 are provided, each one containing a plurality of caps; and
- an output station O, at which said caps are fed to hopper 2 by emptying each receptacle 4 from the caps, according to a manner that will be described below.

Reference is made hereinafter to a single receptacle 4 containing a plurality of caps and provided at input station I.

However, the features disclosed hereinafter for, and in connection with, such receptacle 4 are applicable to all receptacles 4 provided at input station I.

In particular, receptacle 4 is defined by a substantially parallelepiped-shaped cardboard box.

Conveniently, receptacle 4 comprises, preferably on a top wall 4a, an opening path P configured to be opened, in particular to be torn, so as to allow emptying of receptacle 4.

In detail, opening path P is rectilinear and extends on a strip 12 of adhesive tape applied on top wall 4a and holding together the flaps (not shown) of receptacle 4 that have to be opened in order to empty receptacle 4.

Furthermore, with the purpose of maintaining the caps in proper hygienic conditions, the caps are provided inside a bag element, preferably a thin-walled bag made of polymeric material, housed within receptacle 4.

In detail, such bag comprises an opening portion which is openable, for example, under the action of a suction device, in particular when receptacle 4, once opened, is turned upside down and emptied from the caps at output station O, according to a manner that will be described below.

Replenishment plant 1 further comprises a robotic arm 5 configured to pick receptacle 4, in particular to pick one receptacle 4 at a time, from input station I and to carry receptacle 4 to output station O.

In detail, robotic arm 5 comprises a robotic tool 6, which is arranged at, in particular coupled to, a top end portion 5a of such robotic arm 5, and has a picking device 7 for picking receptacle 4 at input station I and for carrying receptacle 4 to output station O.

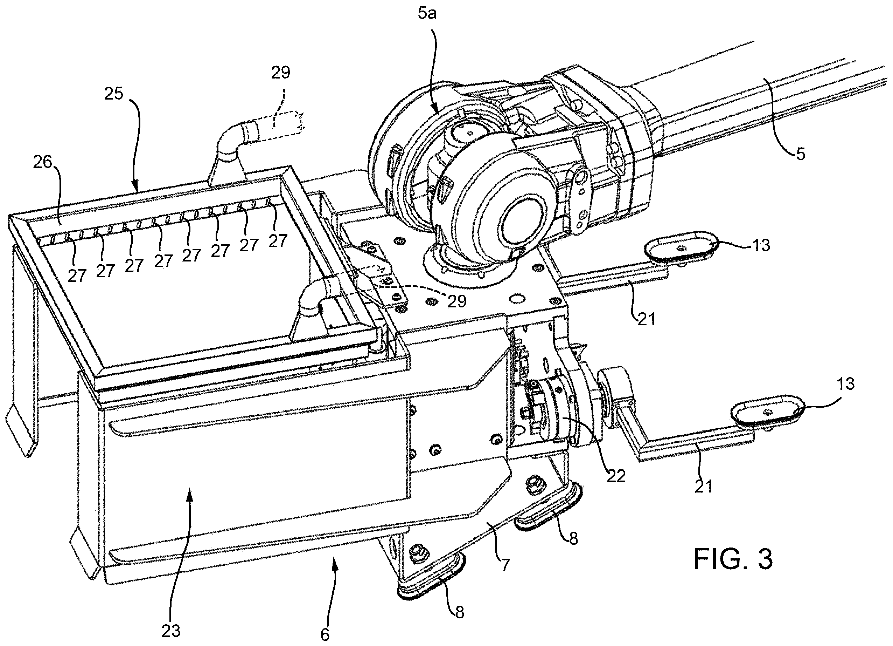

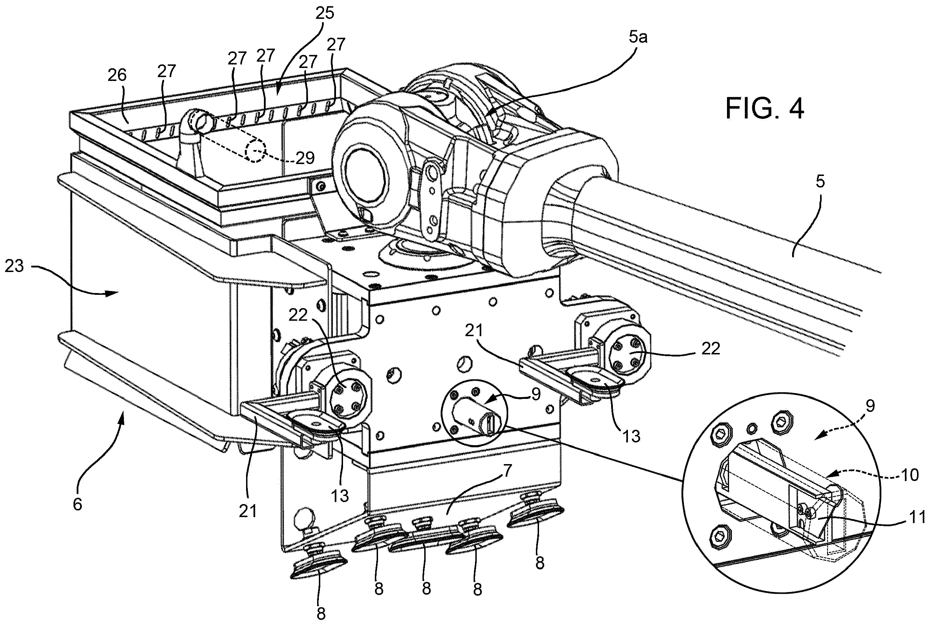

As visible in Figures 3 and 4, picking device 7 comprises a set of first suction cups 8, five in this specific embodiment, configured to cooperate in contact with top wall 4a of receptacle 4, and to apply a suction thereon capable of retaining receptacle 4.

In practice, robotic arm 5 controls, in use, a movement of robotic tool 6 towards input station I, so as to bring suction cups 8 in contact with top wall 4a of the receptacle 4 to be picked. Once in contact with top wall 4a, suction cups 8 are activated to apply a suction on top wall 4a capable of retaining receptacle 4.

In this way, robotic arm 5 can lift receptacle 4 and carry receptacle 4 from input station I to output station O.

According to the embodiment described herein, robotic tool 6 is further configured to perform opening operations on receptacle 4, so as to allow emptying of receptacle 4 from the caps at output station O.

Replenishment plant 1 further comprises a table unit 14, arranged laterally relatively to robotic arm 5 and operatively arranged between input station I and output station O, and configured to support receptacle 4 at least during the above-mentioned opening operations.

More specifically, robotic arm 5 releases, in use, receptacle 4 on table unit 14 by de-activating suction cups 8, so as to allow robotic tool 6 to perform the opening operations on such receptacle 4.

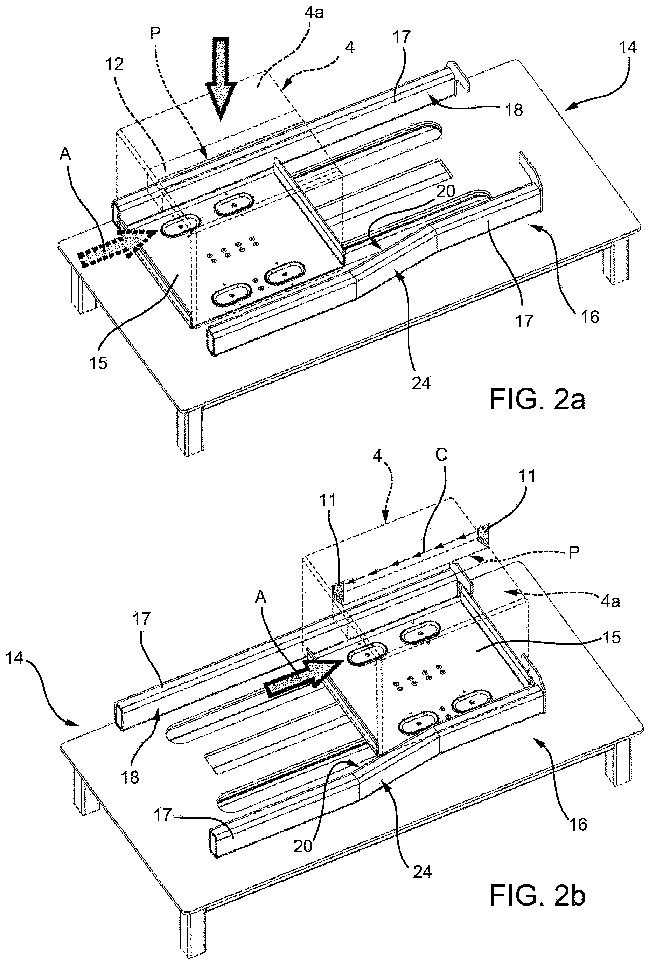

According to this non-limiting preferred embodiment, as visible in particular in Figures 2a and 2b, table unit 14 comprises a movable receiving seat, in particular a slide 15 configured to receive receptacle 4 from robotic arm 5 and to be controlled to reciprocate along an advancing direction A between:
- a first position, in which slide 15 receives, in use, receptacle 4 (Figure 2a); and
- a second position, in which slide 15 supports receptacle 4 while robotic tool 6 performs, in use, the opening operations thereon (Figure 2b).

Preferably, slide 15 is controlled to move between the first position and the second position by means of a not shown motor, in particular an electric motor.

In light of the above, slide 15 is configured to move receptacle 4 along direction A from:
- a release position, in which receptacle 4 is released by robotic arm 5, in particular by suction cups 8 of robotic tool 6, onto slide 15; to
- an operative position, in which receptacle 4 is subject to the opening operations and then is picked up again by robotic arm 5, in particular by robotic tool 6.

In detail, receptacle 4 is in the release position when slide 15 is in the first position; receptacle 4 is in the operative position when slide 15 is in the second position.

For the purpose of carrying out the above-mentioned opening operations, robotic tool 6 comprises an opening device 9 configured to open receptacle 4 after receptacle 4 has been released onto slide 15 and arranged by slide 15 in the operative position.

In detail, opening device 9 comprises an extractable cutting device, preferably an extractable knife 11, housed inside a housing 10 fixed on robotic tool 6, in particular on a back wall of robotic tool 6.

Opening device 9 further comprises extracting means (not shown) configured to control knife 11 so as to automatically extract knife 11 from housing 10 and to automatically retract knife 11 into housing 10.

Preferably, extracting means are of the pneumatic type, i.e. are configured to control the extraction and the retraction of knife 11 by means of air pressure.

According to an alternative embodiment not shown, extracting means may be of the electromagnetic type or of the hydraulic type.

Conveniently, knife 11 is configured to be controlled, in particular moved, along a pre-determined nominal cutting path C, schematically shown in Figure 2b.

More specifically, robotic arm 5 is programmable, in a known manner, to control the movement of robotic tool 6, so that opening device 9, and hence knife 11, is moved along such nominal cutting path C.

In this specific embodiment, cutting path C is rectilinear and substantially parallel to direction A.

Conveniently, the above-mentioned opening path P of receptacle 4 has to correspond to (i.e., overlap), in particular has to be aligned with, cutting path C, to cause the knife 11 to properly cut the strip 12 of adhesive tape and allow the flaps of receptacle 4 to be opened.

For this purpose, replenishing plant 1 comprises a positioning device 16 configured to position receptacle 4, during at least part of the movement of receptacle 4 from the release position towards the operative position, so as to align opening path P with cutting path C.

According to this specific embodiment, positioning device 16 comprises a pair of wall elements 17 extending on table unit 14 and defining a guide channel 18 for receptacle 4.

In detail, guide channel 18 substantially extends along direction A.

In greater detail, guide channel 18 comprises a tapered-section portion 20 configured to cooperate in contact with receptacle 4, during at least part of the movement of receptacle 4 from the release position towards the operative position, so as to rotate (move) receptacle 4 and cause opening path P to align with cutting path C.

More specifically, in the case that robotic tool 6 released receptacle 4 on slide 15 in a non-nominal position, causing opening path P to be transversal, hence not parallel, to direction A, knife 11 would cut strip 12 of adhesive tape along a non-nominal cutting path, different from opening path P and not overlapping opening path P.

This could cause damage to the receptacle 4 or could cause strip 12 not to be cut the right way and, thus, receptacle 4 could not be opened in the proper manner.

This is avoided thanks to positioning device 16, which operates in the manner described above.

As visible in Figures 2a and 2b, tapered-section portion 20 defines a constriction of guide channel 18.

In detail, at least one of the wall elements 17 comprises an inclined portion 24, inclined relatively to direction A and transversal to the remaining portion of such wall element 17.

During its movement from the release position towards the operative position, the mispositioned receptacle 4 cooperates in contact with such inclined portion 24.

After the constriction, the side walls of receptacle 4 cooperate in contact with both wall elements 17 and are thereby guided towards the operative position, where opening path P is nominally aligned with cutting path C (Figure 2b).

More specifically, after moving past the constriction of guide channel 18, receptacle 4 fits inside guide channel 18 in such a way that the side walls of receptacle 4 contact both wall elements 17.

Once strip 12 has been cut open by knife 11, the flaps of receptacle 4 are loose.

According to a non-shown embodiment, strip 12 could extend beyond top wall 4a, being applied also on one or more of the side walls of receptacle 4, in particular on portions of such side walls contiguous to top wall 4a.

In this last case, knife 11 is configured to cut the entire strip 12, including the portions of strip 12 extending on the side walls, so as to permit opening of receptacle 4.

For the purpose of opening the flaps, robotic tool 6 comprises a second set of suction cups 13, two in this specific embodiment, configured to cooperate in contact with the flaps of receptacle 4 and to apply a suction thereon capable of retaining such flaps.

In detail, suction cups 13 are mounted on robotic tool 6 by means of respective L-shaped bars 21, which connect suction cups 13 with the above-mentioned back wall of robotic tool 6.

In greater detail, bars 21 are coupled to respective motors 22, fitted on the back wall of robotic tool 6 and configured to control a rotation of bars 21 about respective axes thereof and, consequently, an eccentric rotation of suction cups 13 about the same axes, respectively.

In practice, after strip 12 has been cut by knife 11, robotic arm 5 controls a movement of robotic tool 6 thereby bringing suction cups 13 in contact with the flaps of receptacle 4.

Once in contact with the flaps, suction cups 13 are activated to apply a suction thereon and motors 22 control the eccentric rotation of suction cups 13, thereby displacing such flaps in an open position.

In case receptacle 4 has four flaps, the prior operation is repeated twice.

Once all the flaps are opened, receptacle 4 is ready to be picked up again.

In particular, after the opening operations have been performed, robotic tool 6 is configured to pick up again the open receptacle 4 and to carry receptacle 4 from table unit 14 to output station O, where receptacle 4 is emptied and the caps are fed to hopper 2.

For this purpose, robotic tool 6 comprises a jaw device 23 configured to pick the open receptacle 4 from slide 15 after the opening operations have been completed.

In detail, jaw device 23 is configured to pick receptacle 4 maintaining the flaps in the open position.

Accordingly, jaw device 23 is shaped so as to fit, in use, around the side walls of receptacle 4 from above, thereby bending the flaps onto such side walls and maintaining the flaps in contact with such side walls.

In this condition, robotic arm 5 lifts receptacle 4 from slide 15 and carries such receptacle 4 to output station O.

At this point, robotic arm 5 controls robotic tool 6 to rotate on itself, so as to cause a rotation of receptacle 4 on itself and the caps to exit from receptacle 4, thereby feeding hopper 2 and replenishing hopper 2 with the caps.

As visible in Figures 3 and 4, robotic tool 6 further comprises retaining means configured to hold the above-mentioned bag during emptying of receptacle 4 at output station O.

In particular, robotic tool 6 comprises a vacuum device 25 configured to be activated when robotic tool 6 is turned upside down for emptying receptacle 4, in order to hold the bag and prevent the bag from exiting receptacle 4 and fall into hopper 2.

More specifically, vacuum device 25 comprises a frame 26 arranged on jaw device 23 and provided with a plurality of ports 27 which, in use, are connected to a vacuum generator 28 (shown in Figure 1).

In detail, vacuum device 25 is fluidically connected to vacuum generator 28 by means of ducts 29 (schematically shown in Figures 1, 3 and 4).

In other words, the vacuum generated at ports 27 attracts the bag, thereby bringing the bag in contact with receptacle 4. In this way, vacuum device 25 prevents such bag from falling inside the hopper 2 along with the caps.

Moreover, the vacuum generated at ports 27 prevents dust eventually present within receptacle 4 but outside the bag from falling down inside hopper 2, thereby improving the hygienic conditions of the replenishment operation.

Conveniently, all the above operations are automatically controlled by means of a control unit 30, configured to receive signals from sensors (not shown) and from a controller (not shown) of hopper 2, and to send control signals to robotic arm 5, robotic tool 6, table unit 14, and vacuum generator device 28.

The operation of replenishment plant 1 is described hereinafter with reference to a single closed receptacle 4 and starting from a condition in which receptacle 4 is at input station I.

In this condition, robotic tool 6, controlled and displaced by robotic arm 5, picks, by means of suction cups 8, receptacle 4 and carries receptacle 4 towards table unit 14.

Then, robotic tool 6 releases receptacle 4 on slide 15, and control unit 30 controls the movement of slide 15 from the first position to the second position and, hence, the movement of receptacle 4 from the release position to the operative position.

During such movement, positioning device 16 cause opening path P to nominally align with cutting path C.

At this point, when receptacle 4 is in the operative position, the opening operations are performed by robotic tool 6. In detail: knife 11 is controlled along cutting path C, so as to cut strip 12 along opening path P; and suction cups 13 are controlled to open the flaps of receptacle 4.

Once the opening operations are performed, robotic tool 6 picks up again the open receptacle 4, by means of jaw device 23, and carries receptacle 4 from table unit 14 to output station O.

At this point, control unit 30 controls robotic tool 6 to rotate, causing the caps to fall into hopper 2, thereby emptying receptacle 4 and replenishing hopper 2.

At the same time, vacuum device 25 is activated for retaining the bag containing the caps, preventing such bag from falling into hopper 2 and dust eventually present within receptacle 4 but outside the bag to fall into hopper 2.

Once all the caps have been fed to hopper 2, receptacle 4 is discarded.

The operation is repeated for each receptacle 4 provided at input station I.

The advantages of replenishment plant 1 according to the present invention will be clear from the foregoing description.

In particular, the whole replenishment operation is optimized as the automation of the process ensures that the caps are provided always at the right moment, thereby improving the buffering of hopper 2.

Furthermore, safety risks are reduced, as no human interaction is needed (no risk of receptacle 4 falling and hurting, no risk of knife utilization by a human operator).

In addition, proper hygienic conditions are maintained: no human operator is required to handle receptacles 4 and the risk of dust and other debris eventually present within receptacle 4 but outside the bag falling into hopper 2 is minimized thanks to vacuum device 25.

Clearly, changes may be made to replenishment plant 1 as described herein without, however, departing from the scope of protection as defined in the accompanying claims.

## Claims

1. A replenishment plant (1) configured to replenish a storage unit (2) with a plurality of caps destined to be applied on packages containing a pourable product; said replenishment plant (1) comprising:
- an input station (I), at which at least one closed receptacle (4) containing said caps is provided;
- an output station (O), at which said caps are fed to said storage unit (2) by emptying said receptacle (4) from said caps; and
- a robotic arm (5) configured to pick said receptacle (4) at said input station (I) and to carry said receptacle (4) to said output station (O);
said robotic arm (5) comprising a robotic tool (6) configured to perform opening operations on said receptacle (4) so as to allow emptying of said opened receptacle (4) from said caps at said output station (O).

2. The replenishment plant as claimed in claim 1, and further comprising a table unit (14) operatively arranged between said input station (I) and said output station (O) and configured to support said receptacle (4) at least during said opening operations; said robotic arm (5) releasing, in use, said receptacle (4) onto said table unit (14); said robotic tool (6) performing, in use, said opening operations when said receptacle (4) is supported by said table unit (14); said robotic arm (5) being configured to carry said receptacle from said table unit (14) to said output station (O), after said robotic tool (6) has performed said opening operations.

3. The replenishment plant as claimed in claim 2, wherein said table unit (14) comprises a movable receiving seat (15) configured to receive said receptacle (4) from said robotic arm (5) and to be controlled along an advancing direction (A) between:
- a first position, in which said receiving seat (15) receives, in use, said receptacle (4); and
- a second position, in which said receiving seat (15) supports said receptacle (4) while said robotic tool (6) performs, in use, said opening operations on said receptacle (4).

4. The replenishment plant as claimed in claim 3, wherein said receiving seat (15) is configured to move said receptacle (4) along said advancing direction (A) from:
- a release position, in which said receptacle (4) is released by said robotic arm (5) onto said receiving seat (15); to
- an operative position, in which said receptacle (4) is subject to said opening operations and then is picked up by said robotic arm (5);
said receptacle (4) being in said release position when said receiving seat (15) is in said first position;
said receptacle (4) being in said operative position when said receiving seat (15) is in said second position.

5. The replenishment plant as claimed in claim 4, wherein said robotic tool (6) comprises an opening device (11) configured to be controlled along a pre-determined nominal opening path (C) so as to open said receptacle (4) along at least one opening path (P) of said receptacle (4), when said receptacle (4) is in said operative position;
said replenishment plant (1) further comprising a positioning device (16) configured to position said receptacle (4), during at least part of the movement of said receptacle (4) from said release position towards said operative position, so as to align said opening path (P) of said receptacle (4) with said pre-determined nominal opening path (C).

6. The replenishment plant as claimed in claim 5, wherein said table unit (14) comprises said positioning device (16).

7. The replenishment plant as claimed in claim 6, wherein said positioning device (16) comprises a pair of wall elements (17) extending on said table unit (14) and defining a guide channel (18) for said receptacle (4), substantially extending along said advancing direction (A); said guide channel (18) comprising a tapered-section portion (20) configured to cooperate in contact with said receptacle (4), during at least part of the movement of said receptacle (4) from said release position to said operating position, so as to rotate said receptacle (4) causing said opening path (P) to align with said pre-determined nominal opening path (C), in case said opening path (P) is misaligned relatively to said pre-determined nominal opening path (C) when said receptacle (4) is received by said receiving seat (15).

8. The replenishment plant as claimed in any one of the foregoing claims, wherein said caps are provided inside a bag element housed within said receptacle (4);
said robotic tool (6) comprising retaining means (25) configured to hold said bag element during emptying of said receptacle (4) from said caps at said output station (O).

9. The replenishing plant as claimed in claim 8, wherein said retaining means comprise a vacuum device (25) .

10. A method for replenishing a storage unit (2) with a plurality of caps destined to be applied on packages containing a pourable product; the method comprising the steps of:
- picking a closed receptacle (4) containing said caps at an input station (I) by means of a robotic arm (5) ;
- performing opening operations on said receptacle (4) by means of a robotic tool (6) of said robotic arm (5); and
- feeding said caps to a storage unit (2) at an output station (O) by emptying the opened receptacle (4).

11. The method as claimed in claim 10, and further comprising the steps of:
- releasing said receptacle (4) on a table unit (14) prior to the step of performing opening operations; and
- carrying the opened receptacle (4) from said table unit (14) to said output station (O).

12. The method as claimed in claim 11, and further comprising the step of:
- moving said receptacle (4), after the step of releasing, from a release position to an operative position, prior to the step of performing opening operations.

13. The method as claimed in claim 12, wherein said receptacle (4) comprises at least one opening path (P) along which said receptacle (4) has to be opened;
the method further comprising the steps of:
- controlling an opening device (11) along a pre-determined nominal opening path (C), after the step of moving; and
- positioning said receptacle (4), during the step of moving, so that said opening path (P) is aligned with said pre-determined nominal opening path (C), prior to the step of controlling.

14. The method as claimed in any one of claims 10 to 13, and further comprising the steps of:
- providing said caps inside a bag element housed within said receptacle (4);
- retaining said bag element during the step of emptying.

15. The method as claimed in claim 14, wherein the step of retaining is performed by means of a vacuum device (25).
